# EUROPÄISCHE PATENTSCHRIFT

(11) **EP 0 829 666 B1**
(45) Veröffentlichungstag und Bekanntmachung des Hinweises auf die Patenterteilung: **05.03.2003**
(21) Anmeldenummer: 97116037.9
(22) Anmeldetag: 16.09.1997
(51) Int. Cl.: F16K 1/34, F16K 1/08

(54) **Ventil**
Valve
Soupape

(30) Priorität: 16.09.1996 DE 19637663
(43) Veröffentlichungstag der Anmeldung: 18.03.1998
(73) Patentinhaber: Schlattmann, Josef, Prof. h.c. Dr.-Ing., 48431 Rheine (DE)
(72) Erfinder: Schlattmann, Josef, Prof. Dr.-Ing., 48431 Rheine (DE); Claussen, Jörg, 48161 Münster (DE); Terhaar, Christian, 48683 Ahaus (DE); Riesselmann, Franz-Josef, 49393 Lohne (DE)
(74) Vertreter: Hilleringmann, Jochen, Dipl.-Ing.

(56) Entgegenhaltungen:
- EP-A- 0 473 119
- EP-A- 0 646 740
- GB-A- 2 085 128
- US-A- 4 765 586

## Beschreibung

Die Erfindung betrifft ein Schrägsitzventil mit einem Ventilgehäuse, welches einen Ventileinlaß und einen Ventilauslaß und einen Durchlaßkanal aufweist, der sich durch das Ventilgehäuse hindurch zwischen dem Ventileinlaß und dem Ventilauslaß erstreckt.

Zum Absperren von Rohrleitungen gegen darin strömende Medien werden häufig Ventile eingesetzt, insbesondere Hubventile mit einer kegelförmigen Sitzfläche und einem an einer Spindel festgelegten Absperrkörper, der beim Schließen des Ventiles senkrecht zur Strömungsrichtung verfahren wird. Nachteilig sind bei solchen Ventilen der große Strömungswiderstand und dadurch die hohen Strömungsverluste, die aufgrund der Strömungsumlenkung im Schließbereich auftreten.

Eine Weiterentwicklung dieser herkömmlichen Geradsitzventile stellen Schrägsitzventile dar; hier entspricht die Ventilsitzfläche einem schrägen Abschnitt eines Kreiskegels, dessen Symmetrieachse parallel zur Spindelachse verläuft. Eine schräge Anordnung von Ventilsitz und Absperrkörper führt zwar zu einer Reduzierung des Strömungswiderstandes, ist aber bei einer schräg zur Rohrachse angeordneten Spindel nachteilig mit einem größeren Hubweg und einer schlechteren Bedienbarkeit verbunden. Bei Schrägsitzventilen mit einer rechtwinkligen Anordnung von Spindelachse und Rohrachse treten bei einer größeren Druckdifferenz zwischen den Absperrkörperseiten wegen einer ungleichmäßigen Verteilung der Flächenpressung am Ventilsitz Undichtigkeiten auf, da die notwendige Flächenpressung nicht überall gegeben ist. Bei derartigen Schrägsitzventilen erfordert eine exzentrische Anordnung des Absperrkörpers an der Spindel eine zusätzliche Verdrehsicherung durch Sicherungselemente, wie Stifte.

Aus DE-A-43 42 025 und DE-A-36 09 772 sind hinsichtlich der Dichtigkeitsprobleme optimierte Schrägsitzventile bekannt. Eine Vergleichmässigung der von der Spindelkraft verursachten Flächenpressung über der Ventilsitzfläche wird durch eine exzentrische Anordnung der mit dem Absperrkörper verbundenen Spindelachse relativ zum Mittelpunkt der in Spindelachsenrichtung projizierten von der Ventilsitzfläche aufgespannten Fläche erzielt. Die Spindelachse ist in Richtung eines spindelnahen (oberen) Absperrkörperabschnitts verschoben, wobei der Angriffspunkt der Spindelkraft so angeordnet ist, daß ihre Wirklinie die Lote auf die Ventilsitzflächen im Schnittpunkt der Absperrkörpermittelebene mit der Ventilsitzfläche und die an dem Absperrkörper senkrecht angreifenden Komponente der Druckkraft innerhalb eines durch diese drei sich schneidenden Geraden gebildeten Dreieckes schneidet.

Eine Untersuchung der Kraftverhältnisse an dem Absperrkörper zeigt, daß auch bei dieser Ausführungsform eine Grenzdruckdifferenz Δp_{G} existiert, bei welchem die Grenzandrückkraft F_{pG} an einer Stelle der Dichtfläche aufgehoben wird, so daß Undichtigkeiten auftreten. Durch Erhöhen der Spindelkraft läßt sich in gewissen Grenzen eine Verbesserung erzielen; die Spindelkrafterhöhung ist jedoch durch die Festigkeit von Spindel und Ventilgehäuse begrenzt.

Ferner sind weitere Möglichkeiten der Erhöhung der Grenzdruckkraft F_{Pg} bekannt, indem einerseits Ventile mit einem sehr steilen, nahezu senkrechten Ventilsitz oder andererseits Ventile mit einem kegelförmigem Ventilsitz eingesetzt werden, deren Kegelachse zu der Spindelachse geneigt ist. Eine steile Sitzfläche hat den Nachteil, daß der Ventilteller beim Öffnen des Ventiles aufgrund einer Selbsthemmung verklemmen und nicht mehr zerstörungsfrei geöffnet werden kann. Bei der geneigten Ausführungsform des Kegelsitzes werden nur sehr flache ellipsenförmige Durchflußquerschnitte erzielt, so daß diese Ventile einen hohen Strömungswiderstand haben.

Aus DE-A-24 30 537 ist ein Schrägsitzventil mit einem keilförmigen Absperrkörper bekannt, der quer in den Durchlaßkanal eines Ventilgehäuses hinein bewegbar ist. Mit seiner Schrägfläche dichtet der Absperrkörper gegen einen im Durchlaßkanal ausgebildeten Ventilsitz ab, der eine umlaufende wulstförmige Ventildichtfläche aufweist. Das Ventilgehäuse weist Führungen für den keilförmigen Absperrkörper auf, womit verhindert wird, daß der Absperrkörper beim Andrücken gegen die Ventildichtfläche nicht in Richtung der Erstreckung des Durchlaßkanals ausgelenkt werden kann. Dies erhöht den Bearbeitungsaufwand des Ventilgehäuses und verteuert damit die Herstellung des Ventils.

Der Erfindung liegt die Aufgabe zugrunde, ein Ventil, insbesondere ein Schrägsitzventil zu schaffen, das bei denkbar einfacher Konstruktion den Durchlaßkanal im Ventilgehäuse zuverlässig abdichtet.

Zur Lösung dieser Aufgabe wird mit der Erfindung ein Ventil mit den Merkmalen des Anspruchs 1 vorgeschlagen; die Unteransprüche betreffen verschiedene Ausgestaltungen der Erfindung.

Bei dem erfindungsgemäßen Ventil ist die Ventildichtfläche des Ventilsitzes ballig ausgebildet.

Durch diese ballige Ausbildung der Ventildichtfläche des Ventilsitzes kommt es zu einer Linienberührung zwischen dem Absperrkörper und dem Ventilsitz. Dadurch, daß der Absperrkörper zum Absperren des Durchlaßkanals durch linienförmig Anlage an der ballig (z.B. sphärisch oder konvex) ausgebildeten Ventildichtfläche zumindest teilweise in den Ventilsitz hinein bewegbar ist und damit im abgesperrten Zustand den Ventilsitz zumindest teilweise durchdringt, kommt es also zu einer Hinterschneidung des Ventilsitzes und damit zu einer zuverlässigen Abdichtung, indem der anstehende Druck in eine den Absperrkörper weiter in den Ventilsitz hineindrückenden Andrückkraft umgesetzt wird.

Ferner liegt die Ventildichtfläche des Ventilsitzes auf einem (imaginären) Ringkörper und bildet einen Teil von dessen Oberfläche. Dieser Ringkörper weist eine Mittelebene auf, auf der die Mittelachse des Ringkörpers steht. Da die Ventildichtfläche von oberhalb und unterhalb dieser Mittelebene angeordneten Oberflächenteilen des Ringkörpers besteht, verlaufen die Ventilsitz-Ebene und die Mittelebene in einem spitzen Neigungswinkel zueinander, der insbesondere zwischen 10° und 30° und vorzugsweise etwa bei 20° liegt.

Mit anderen Worten weist der Ringkörper eine dem Ventileinlaß zugewandte Unterseite und eine dem Ventilauslaß zugewandte Oberseite auf. Hierbei wird die Ventildichtfläche von Teilen der Oberfläche des imaginären Ringkörpers gebildet, die teilweise auf der Oberseite, teilweise auf der Unterseite und teilweise in Höhe der Mittelebene an der Innenseite des Ringkörpers zwischen dessen Oberund Unterseite angeordnet sind.

Bei dem Ringkörper handelt es sich vorzugsweise um einen kreisrunden oder ovalen Ringkörper mit insbesondere kreisförmigem oder anderweitig rundem Querschnitt. Die von dem Ringkörper in der Projektion in Bewegungsrichtung des Absperrkörpers umschlossene Fläche ist gleich der Querschnittsfläche des Absperrkörpers. In Höhe dieser beiden Flächen berühren sich die Außenseite des Absperrkörpers und die Innenseite des Ringkörpers entlang einer Dichtlinie. Eine derartige Linienpressung ist mit höheren Andrückkräften realisierbarer als eine Flächenpressung, weshalb das erfindungsgemäße Ventil bei denkbar einfachem Aufbau zuverlässig abdichtet.

In vorteilhafter Weiterbildung der Erfindung ist ferner vorgesehen, daß die Bewegungsrichtung des Absperrkörpers im wesentlichen rechtwinklig zur Erstreckung des Durchlaßkanals verläuft. Zusätzlich kann zweckmäßigerweise vorgesehen sein, daß die Ebene, in der der Ringkörper angeordnet ist, unter einem spitzen Ringkörper-Neigungswinkel zur Erstreckung des Durchlaßkanals verläuft. Dieser Neigungswinkel liegt vorzugsweise zwischen 30° und 60°, insbesondere zwischen 40° und 50° und vorzugsweise im wesentlichen bei etwa 45°.

Bei dem Absperrkörper handelt es sich vorzugsweise um einen spitzen, stumpfen oder abgeschrägten Kegel, während der imaginäre Ringkörper ein ovaler Ring mit einem kreisförmigen Querschnitt ist, der derart zur Bewegungsrichtung des Absperrkörpers geneigt ist, daß er bei Betrachtung in Bewegungsrichtung des Absperrkörpers eine kreisrunde Fläche umschließt.

In vorteilhafter Weiterbildung der Erfindung ist vorgesehen, daß der Ventilsitz integraler Bestandteil des Ventilgehäuses ist und durch Bildung des Ventilgehäuses erzeugt wird. Alternativ dazu kann vorgesehen sein, daß der Ventilsitz von einem separaten Bauteil gebildet ist, das in das Ventilgehäuse eingesetzt ist.

In vorteilhafter Weiterbildung der Erfindung ist ferner vorgesehen, daß das Ventilgehäuse die Form eines T-Rohrstücks aufweist, das ein im wesentlichen geradlinig durchgehendes Durchgangs-Rohrstück und ein dazu im wesentlichen quer verlaufendes Abzweig-Rohrstück aufweist. Der Absperrkörper befindet sich im Abzweig-Rohrstück und wird seitlich in das Durchgangs-Rohrstück hineinbewegt. Im Durchgangs-Rohrstück ist eine nach innen vorstehende umlaufende Ringfläche ausgebildet, die als Vorwölbung in das Durchgangs-Rohrstück hineinragt. Diese ringförmige Vorwölbung steht unter einem Winkel von ca. 45° zur Längsachse des Durchgangs-Rohrstücks und damit auch unter 45° zur Längsachse des Abzweig-Rohrstücks. Der Mittelpunkt der von der ringförmigen Vorwölbung umgebenen Fläche fällt mit dem Schnittpunkt der Längsachsen des Durchgangs-Rohrstücks und des Abzweig-Rohrstücks zusammen. Das wiederum bedeutet, daß die ringförmige Vorwölbung im Eckenbereich zwischen dem Durchgangs-Rohrstück und dem Abzweig-Rohrstück verläuft.

Ein gemäß der obigen Spezifikation ausgebildetes Ventilgehäuse hat den Vorteil, daß unter Verwendung ein und desselben Ventilgehäuses sowohl Durchgangs- als auch Eckventile hergestellt werden können. Im Falle eines Durchgangsventils befindet sich der Absperrkörper und das dieses bewegende Bewegungsorgan im Abzweig-Rohrstück, um in das Durchgangs-Rohrstück hineinbewegt zu werden. Bei Verwendung des Ventilgehäuses für ein Eckventil befindet sich der Absperrkörper in einem Teil des Durchgangs-Rohrstücks und läßt sich in den anderen Teil des Durchgangs-Rohrstücks hineinbewegen, um den Eck-Durchlaßkanal zwischen diesem Teil des Durchgangs-Rohrstücks und dem Abzweig-Rohrstück abzusperren. Während also beim Durchgangsventil die Ein- und Auslässe des Ventilgehäuses durch die axialen Enden des Durchgangs-Rohrstücks gebildet sind, sind bei einem Eckventil die Ein- und Auslässe des Ventilgehäuse durch eines der beiden axialen Enden des Durchgangs-Rohrstücks und durch das axiale Ende des Abzweig-Rohrstücks gebildet.

Die ringförmige wulstartige Vorwölbung auf der Innenseite des Durchgangs-Rohrstücks wird vorzugsweise durch lokale sickenförmige Verformung des T-Rohrstücks in dessen Wandung gebildet. Bei einem derartigen Ventilgehäuses befindet sich also in der Außenseite eine umlaufende unter 45° zur Längsachse des Durchgangs-Rohrstücks und zur Längsachse des Abzweig-Rohrstücks geneigte Vertiefung. Das Ventilgehäuse läßt sich mit Vorteil aus Kunststoff fertigen. Als Herstellungsverfahren bietet sich die Spritzgußtechnik oder auch die Hochdruckumformtechnik an, bei der durch Erzeugen hoher Innen- und/oder Außendrücke einem Rohling eine gewünschte Form verliehen wird. Der Vorteil beider Herstellungsverfahren besteht darin, daß die Innenseite des Durchgangs-Rohrstücks und damit der Ventilsitz mit seiner Ventildichtfläche nicht mehr nachbearbeitet werden muß, sondern sich direkt mit dem Ventilgehäuse fertigen läßt.

Das erfindungsgemäße Ventil weist also ein Ventilgehäuse mit einem Ventilsitz mit einer dreidimensionalen-, konvex gekrümmten Sitzfläche als Ventilsitzfläche auf. In der Schließstellung des Ventiles greift ein insbesondere an einer Spindel oder einem anderen Bewegungsorgan endseitig angeordneter Absperrkörper form- und kraftschlüssig in den Ventilsitz ein.

Die Ventildichtfläche liegt auf einer Teiloberfläche eines imaginären, sich ringförmig um den Ventilsitz erstreckenden Ringkörpers, der durch Rotation einer (Querschnitts-) Fläche auf einer in einer Rotationsebene liegenden Kreisoder Ellipsenbahn um eine im Durchflußquerschnitt des Ventiles angeordnete Mittelachse oder durch Drehen um diese Mittelachse entsteht. Die Querschnittsfläche ist an ihrem der Mittelachse zugewandten Rand konvex gekrümmt, so daß die Tangenten an mittelachsennahe Umfangspunkte des Ringkörpers nahezu parallel zur Mittelachse verlaufen und die Tangente an unteren bzw. oberen, zur Rotationsebene weitest beabstandeten Umfangspunkten des Ringkörpers nahezu parallel zur Rotationsebene liegen. Als Querschnittsflächen des Ringkörpers eignen sich besonders Kreis- oder Ellipsenflächen oder teilweise durch Parabeln oder Hyperbeln begrenzte Flächen. Ebenfalls eignen sich aus einem Polygon bestehende Flächen, deren rotationsebenenferner Umfangsabschnitt von einer gegenüber der Rotationsebene flach geneigten Geraden und deren mittelachsennaher Umfangsabschnitt von einem Kreisabschnitt und deren rotationsebenennaher Umfangsabschnitt von einer gegenüber der Rotationsebene steil verlaufenden Geraden gebildet werden.

Bei einer besonders bevorzugten Ausführungsform ist der imaginäre Ringkörper mit einem Torus als Oberfläche versehen, wobei der Ringkörper zu der zwischen dem Ventileinlaß und -auslaß verlaufenden Hauptströmungsrichtung bzw. der Rohrachse unter einem spitzen Winkel α (Ringkörper-Neigungswinkel) geneigt ist. Der Absperrkörper ist zweckmäßigerweise ein Kugelstumpf, der in der Schließstellung des Ventils mit der Ventildichtfläche (Torus) des Ventilsitzes eine Linienberührung aufweist. Eine Linienberührung weist gegenüber einer Flächenberührung eine wesentlich höhere Flächenpressung auf und die Sitzfläche ist aufgrund der kleinen Berührfläche unempfindlicher gegen Verunreinigungen.

Die Dichtlinie entspricht einer auf dem Torus umlaufenden Mantellinie, auf welcher ein erster spindelnaher (oberer) Mantellinienpunkt und ein zweiter spindelferner (unterer) Mantellinienpunkt angeordnet ist. Im senkrechten Schnitt hat der Ringkörper eine erste (obere) Querschnittsfläche und eine zweite (untere) Querschnittsfläche. Der erste Mantellinienpunkt liegt auf einem Abschnitt eines ersten Umfangs der oberen Querschnittsfläche, welcher zwischen einem ersten Schnittpunkt und einem ersten Tangentialpunkt verläuft, wobei der erste Schnittpunkt ein spindelseitiger (oberer) Schnittpunkt eines ersten, in Wirkrichtung einer an der zuströmseitigen Absperrkörperseite angreifenden Druckkraft verlaufenden Durchmessers der oberen Querschnittsfläche mit dem ersten Umfang ist, und der erste Tangentialpunkt ein erster Berührpunkt einer parallel zur Spindelachse verlaufenden Tangente an die Mantelinnenfläche ist. Der zweite Mantellinienpunkt liegt auf einem Abschnitt eines zweiten Umfangs der unteren Querschnittsfläche, welcher einen zweiten Schnittpunkt und einen zweiten Tangentialpunkt miteinander verbindet, wobei der zweite Schnittpunkt ein mantelinnenseitiger Schnittpunkt eines zweiten, in der Rotationsebene liegenden Durchmessers der unteren Querschnittsfläche mit dem zweiten Umfang ist, und der zweite Tangentialpunkt ein zweiter Berührpunkt einer parallel zur Spindelachse verlaufenden Tangente an die Mantelinnenfläche ist.

Bei einer derartigen Anordnung von Ventilsitz und Ventilteller hinterschneidet der Absperrkörper in Schließstellung des Ventiles den Ventilsitz im unteren Bereich des Ventilsitzes in Richtung der durch die Druckdifferenz hervorgerufenen Andrückkraft Fₚ, so daß die Armatur in diesem Bereich selbstabdichtend schließt. Der obere Bereich des Absperrkörpers wird nicht von der Druckkraft Fₚ vom Ventilsitz weggedrückt, da sich der gesamte Absperrkörper im unteren Bereich des Ventiles an der Spindelführung senkrecht zur Spindelachse abstützt. Der Absperrkörper ist somit ohne wirkende Kraft in axialer Richtung der Spindel stabil. Eine wirkende Spindelkraft Fₛ würde sich auf die gesamte Dichtfläche aufteilen, ohne daß eine zusätzliche Druckkraft Einfluß auf die daraus resultierende Flächenpressung zwischen Ventilsitz und Absperrkörper hat.

Eine Untersuchung der an dem Absperrkörper angreifenden Kräfte zeigt, daß im Idealfall die Dichtlinie zwischen dem ersten (oberen) Tangentialpunkt und dem zweiten (unteren) Tangentiallinienpunkt der beiden Querschnittsflächen verläuft.

Ein scheibenförmiger Ventilteller mit einer konkav gekrümmten Tellerrandfläche als Ventiltellerdichtfläche, der in Schließstellung kraft- und formschlüssig an dem Ventilsitz anliegt und dessen zuströmseitige Ventiltellervorderseite zu der Rotationsebene des imaginären Ringkörpers unter einem spitzen Winkel β (Tellerneigungswinkel) angeordnet ist, eignet sich ebenfalls als Absperrkörper. Die Kontur des Ventiltellers ist derart ausgebildet, daß in Schließstellung des Ventils die Ventiltellervorderseite von einer die Dichtfläche abschließenden Dichtkante (Dichtlinie) begrenzt wird.

Eine Verschiebung der Spindelachse in Richtung des oberen Mantellinienpunktes wirkt sich in Verbindung mit den an der Dichtfläche wirkenden Reibungskräften positiv auf eine Kompensierung der im oberen Bereich der Dichtfläche entstehende Momente aus.

Die Absperrkörperformen des erfindungsgemäßen Ventils erlauben eine problemlose bewegungsorgan-, insbesondere spindelseitige Einführung des Absperrkörpers in den Ventilsitz, wobei in der Schließstellung der Absperrkörper an jeder Stelle des. Ventilsitzes dicht abschließt. Durch die Neigung des imaginären Ringkörper nimmt der Strömungswiderstand im Ventil ab, da kreisförmige bzw. elliptische Durchflußquerschnitte erzielt werden. Die gekrümmte Oberfläche des imaginären Ringkörpers begünstigt die Durchströmung des Ventiles, d.h. der Strömungswiderstand fällt gering aus.

Ein weiterer Vorteil ist die Selbstzentrierung des Ventiltellers im Ventilsitz, da die Kräfte im unteren Bereich des Ventiltellers immer ausreichend groß sind, um die entgegenwirkenden Reibungskräfte im oberen Bereich der Sitzfläche zu überwinden und damit den Ventilteller in eine optimale Lage gleiten lassen.

Abschließend bleibt festzuhalten, daß mit einer balligen, sphärischen, konvexen Ventilsitzfläche, die die Teiloberfläche eines Torus ist, eine wesentlich bessere Abdichtung als bei einem Hubventil mit einer kegelförmigen Ventilsitzfläche erreicht wird. Ferner ist die Gestaltung eines strömungsgünstigeren Gehäusedurchganges mit etwa gleichbleibendem, kreisförmigen Durchgangsquerschnitt möglich.

Bei der Erfindung handelt es sich also um ein Ventil mit einem Ventilgehäuse, welches einen zuströmseitigen Ventileinlaß sowie einen abströmseitigen Ventilauslaß aufweist. Das Ventilgehäuse ist versehen mit einem Ventilsitz und einem an einer Spindel endseitig angeordneten Absperrkörper, wobei der Absperrkörper in Schließstellung des Ventils kraftschlüssig oder kraft- und formschlüssig an einer Ventildichtfläche des Ventilsitzes anliegt. Der Ventilsitz weist eine dreidimensional, konvex gekrümmte Sitzfläche als Ventildichtfläche auf. Anders ausgedrückt, liegt die Ventildichtfläche auf einer Oberfläche eines imaginären, sich ringförmig um den Ventilsitz erstreckenden Körpers (Ringkörper) mit einer Mittelachse. Dieser Ringkörper ist bezogen auf die zwischen dem Ventileinlaß und dem Ventilauslaß verlaufenden Hauptströmungsrichtung unter einem spitzen Winkel α (Ringkörper-Neigungswinkel) geneigt. Die Oberfläche des Ringkörpers ist zweckmäßigerweise ein Torus.

Bei einer vorteilhaften Weiterbildung der Erfindung wird die Spindel entlang der Spindelachse senkrecht, d.h. rechtwinklig zur entlang einer Rohrachse verlaufenden Hauptströmungsrichtung verfahren, wobei in der Schließstellung des Ventiles der Absperrkörper mit der Ventildichtfläche des Ventilsitzes mindestens eine Linienberührung aufweist und mit mindestens einer Dichtlinie einer auf einer Mantelinnenfläche des Ringkörpers umlaufenden Mantellinie anliegt, auf welcher ein erster, spindelnaher Mantellinienpunkt und ein zweiter, spindelferner Mantellinienpunkt angeordnet sind. Der erste Mantellinienpunkt liegt auf einem Abschnitt eines ersten Umfangs einer ersten RingkörperRingkörper-Querschnittsfläche des Ringkörpers zwischen einem ersten Schnittpunkt und einem ersten Tangentialpunkt, wobei der erste Schnittpunkt ein spindelseitiger Schnittpunkt eines ersten, parallel zur Wirkrichtung einer Druckkraft Fp verlaufenden Durchmessers der ersten Querschnittsfläche mit dem ersten Umfang ist und der erste Tangentialpunkt der Berührpunkt einer ersten, parallel zur Spindelachse verlaufenden Tangente an die Mantelinnenfläche ist. Der zweite Mantellinienpunkt liegt auf einem Abschnitt eines zweiten Umfangs einer zweiten RingkörperQuerschnittsfläche zwischen einem zweiten Schnittpunkt und einem zweiten Tangentialpunkt, wobei der Schnittpunkt ein mantelinnenseitiger Schnittpunkt eines zweiten, in der Mittelebene liegenden Durchmessers der zweiten Querschnittsfläche mit dem zweiten Umfang ist und der zweite Tangentialpunkt der Berührpunkt einer zweiten, parallel zur Spindelachse verlaufenden Tangente an die Mantelinnenfläche ist, wobei die Druckkraft Fp in Normalenrichtung an einer zuströmseitigen Absperrkörpervorderseite angreift und durch eine Druckdifferenz Δp zwischen dem Ventileinlaß (11) und dem Ventilauslaß (12) hervorgerufen ist.

Vorzugsweise handelt es sich bei dem Absperrkörper um einen Kegel oder einen Kegelstumpf, wobei der Absperrkörper insbesondere schließseitig eine konvex gekrümmte Außenkontur aufweist.

Alternativ ist der Absperrkörper schließseitig von einem scheibenförmigen Ventilteller mit einer konkav gekrümmten Tellerrandfläche als Ventiltellerdichtfläche gebildet, wobei die Dichtlinie eine zuströmseitig angeordnete Dichtkante der Ventiltellerdichtfläche ist, welche eine zuströmseitige Ventiltellerseite (Ventiltellervorderseite) begrenzt, so daß die Ventiltellervorderseite zu einer auf der Rotationsachse rechtwinklig stehenden Rotationsebene des Ringkörpers unter einem spitzen Winkel β (Tellerneigungswinkel) geneigt ist. Hierbei ist mit Vorteil vorgesehen, daß die Dichtlinie und/oder Dichtkante an der auf einer Mantelinnenfläche des Ringkörpers umlaufenden Mantellinie anliegt, welche zwischen dem ersten, spindelnahen Mantellinienpunkt und dem zweiten, spindelfernen Mantellinienpunkt verläuft, wobei der erste Mantellinienpunkt der erste Tangentialpunkt und der zweite Mantellinienpunkt der zweite Tangentialpunkt ist.

Vorzugsweise ist die Spindelachse aus dem Zentrum des Absperrkörpers verschoben angeordnet, und zwar vorzugsweise in Richtung des ersten Mantellinienpunktes verschoben angeordnet.

Das erfindungsgemäße Ventil lösst sich mittels eines Herstellungsverfahrens für eine Armatur, insbesondere für ein Schrägsitzventil mit insbesondere einer torusförmigen Sitzfläche, realisieren, mit welchem in kurzen Herstellungszeiten (Taktzeiten) das Armaturengehäuse mit komplexer Geometrie kostengünstig und einfach gefertigt werden kann, und welches eine hohe Reproduktionsrate in einem engen Toleranzbereich gewährleistet.

Bisher wurden Armaturen und Ventile in einer Kombination von urformenden bzw. umformenden und zerspanenden Verfahren gefertigt, so daß eine nachträgliche Einarbeitung des Ventilsitzes erforderlich ist. Diese konventionellen Herstellungsverfahren sind zeit- und kostenintensiv, was unter anderem auf eine große Anzahl von Verfahrensschritten und insbesondere auf die Nacharbeitung der Ventilsitzkontur zurückgeführt werden kann.

Das erfindungsgemäße Ventil läßt sich auf einfache Weise dadurch herstellen, daß aus einem als Rohling dienenden Rohrstück mit einem vorgegebenen Innendurchmesser durch spanlose Formgebung ein ein Fertigteil bildendes Armaturengehäuse mit einer räumlich, konvex gekrümmten Armaturensitzfläche als eine Armaturendichtfläche gefertigt wird.

Als bevorzugtes Herstellungsverfahren wird ein Hochdruckumformverfahren (HPF) eingesetzt, bei dem das Armaturengehäuse seine Fertigteilform in mehreren Verfahrensschritten erhält. Mit dem erfindungsgemäßen Verfahren können auch Ventilgehäuse mit einem schrägen Ventilsitz, der eine dreidimensional konvex gekrümmte Ventilsitzdichtfläche hat, hergestellt werden.

Der Innendurchmesser eines als Rohling eingesetzten Rohres entspricht der Nennweite der Armatur. Mit dem Hochdruckumformverfahren können Rohlinge einer Wanddicke s zwischen 1,0 bis 10,0 mm verarbeitet werden, wobei bei Aluminium auch Rohre mit Wanddicken bis zu 25,0 mm eingesetzt werden können.

Weiterhin vorteilhaft bei diesem Verfahren ist, daß das Rohr des Ventiles auch im Umformbereich nahezu die ursprüngliche Wanddicke des Rohlings aufweist und im Bereich des Sitzes abhängig von einer vorgegebenen Elastizität des Sitzes variabel einstellbar ist.

Durch eine veränderliche Prozeßführung beim Hochdruckumformen (HPF) kann die Wanddicke variiert werden, so daß im Bereich der Ventilsitzfläche die Auslegung der Ventilsitzfläche als eine Ringfeder möglich ist, wodurch Fertigungsund Betriebs-Toleranzen elastisch ausgeglichen werden.

Die Maßhaltigkeit der Werkstücke ist beim Hochdruckumformen nur an der formgebenden Seite des Werkzeuges, d.h. an der druckabgewandten Werkstückoberfläche, gegeben. Die Maßhaltigkeit der Ventilsitzfläche wird im wesentlichen von dem wirkenden Umformdruck pᵢ bzw. pₐ und dem Durchmesserverhältnis Stempelaußendurchmesser zu Rohrinnendurchmesser beeinflußt, wobei das Verhältnis größer als 1 ist. Die Toleranzen für die werkzeugseitige Oberfläche, also die druckabgewandte Fertigteilseite sind bei der Hochdruckumformung (HPF) sehr klein. Weiterhin werden sehr hohe Wiederholgenauigkeiten in einem engen Toleranzbereich erzielt.

Ferner bietet die Hochdruckumformung (HPF) die Möglichkeit, aus allen verformungsfähigem (duktilen) Materialien fertige Gehäuse herzustellen.

Weiterhin vorteilhaft ist, daß durch den hohen Umformgrad im Bereich des Ventilsitzes eine Kaltverfestigung hervorgerufen wird, welche den Ventilsitz aufgrund der erhöhten Festigkeit gegenüber Verschleiß schützt.

Da bei dem bevorzugt einsetzbaren Verfahren zur Herstellung des erfindungsgemäßen Ventils die Dichtfläche keiner Nachbearbeitung bedarf und eventuell vorhandene Anschlüsse direkt an das Gehäuse angeformt werden können, sind bei optimaler Materialausnutzung, minimaler spanender Bearbeitung (Herstellung des Ventiltellers), Ventilgehäuse in sehr kurzen Taktzeiten herstellbar. Die Taktzeit für die Herstellung eines Armaturengehäuses beträgt bei dem dreistufigen HPF-Verfahren unter 3 min. Mit der Hochdruckumformung (HPF) ist es möglich, durch Einebnung der Rauhigkeit (Spitzen) sehr glatte Oberflächen zu erzeugen, was sich positiv auf den Wirkungsgrad der geöffneten Armatur aufgrund eines geringeren Strömungswiderstandes auswirkt.

Bei einem Ventil mit einem Absperrkörper mit konkav gekrümmter Dichtfläche wird die Kontur des Ventiltellers und eventuell des Ventilsitzes mit einer CNC-Fräsmaschine und einem Formfräser eingebracht. Eine Feinbearbeitung ist ggf. ebenfalls möglich.

Die Spindel wird im eingesetzten Zustand des Absperrkörpers im Ventilsitz, d.h. in der potentiellen Schließstellung des Ventiles, positioniert. Hierzu wird eine Bohrung (Aufnahme) zur Festlegung der Spindel am Absperrkörper erst im eingesetzten Zustand gebohrt oder die Spindel wird in einer vorhandenen Bohrung des Absperrkörpers positioniert und eingestellt.

Das vorstehend beschriebene Verfahren zur Herstellung einer Armatur mit einem Armaturengehäuse und einem darin angeordneten Absperrkörper ist dadurch gekennzeichnet, daß aus einem als Rohling dienenden Rohrstück mit einem vorgegebenen Rohrinnendurchmesser d_{R,i} durch spanlose Formgebung ein ein Fertigteil bildendes Armaturengehäuse mit einer räumlich, konvex gekrümmten Armaturensitzfläche als eine Armaturendichtfläche gefertigt wird. Hierbei erhält das Armaturengehäuse seine Fertigteilform vorzugsweise in mehreren Verfahrensschritten durch Hochdruckumformen.

In vorteilhafter Weiterbildung ist bei dem Verfahren vorgesehen, daß bei der Verformung des Rohlings zum Fertigteil die Wanddicke des Rohlings erhalten bleibt, wobei das Armaturengehäuse auch im Verformungsbereich nahezu die ursprüngliche Wanddicke des Rohlings und im Bereich des Sitzes die Wanddicke abhängig von einer vorgegebenen Elastizität des Sitzes variabel einstellbar ist.

Durch die Verformung des Rohlings wird vorzugsweise eine federnde Armaturensitzfläche, insbesondere in Form einer Ringfeder, erreicht.

Bei der nach dem hier beschriebenen Verfahren hergestellten Armatur handelt es sich insbesondere um ein Hubventil mit einem Ventilgehäuse und einem schrägen Ventilsitz. Hierzu wird vorteilhafterweise in einem ersten Verfahrensschritt zur Grobformgebung der Außenkontur des Ventilgehäuses der in einer ein- oder mehrteiligen Werkzeugform angeordnete Rohling zu einem T-Stück mit einem Durchgangsstück und einem endseitig verschlossenen Abzweig (T-Steg) aufgeweitet wird, wobei nach dem Schließen der Werkzeugform der Rohling durch die an den Stirnflächen des Rohlings von Druckstempeln erzeugten Umformkräfte gestaucht und gleichzeitig von einem Innendruck pᵢ in eine werkzeugseitig für die Bildung des T-Steges vorgegebene Öffnung gedrückt wird. Anschließend erhält das Ventilgehäuse in einem zweiten Verfahrensschritt seine Fertigteilaußenkontur, indem das T-Stück quer zur Längsrichtung des Durchgangsstückes im Bereich des Abzweiges in einem Werkzeuggesenk durchgesetzt wird, und von dem Abzweig des T-Stückes das geschlossene Ende (Deckel) abgeschert wird, und in einem dritten Verfahrensschritt zur Innenformgebung im Bereich des Durchsatzes, wird vor dem Abzweig eine Ventilsitzkontur durch einen außenseitig an dem T-Stück anliegenden Außenhochdruck pₐ an Innenkonturstempeln abgeformt, welche als innenliegende Werkzeuge in den Abzweig des durchgesetzten T-Stückes und in endseitige offene Abschnitte des Durchgangsstückes eingeschoben sind.

Vorteilhafterweise wird bei der Innenformgebung mit den Innenkonturstempeln im Bereich des Durchsatzes und in Längsrichtung vor dem Abzweig des durchgesetzten T-Stückes ein Ventilsitz abgeformt, dessen Ventildichtfläche auf einer Oberfläche eines sich schräg zum Abzweig um den Ventilsitz erstreckenden, imaginären Ringkörper liegt.

Der Rohling weist zweckmäßigerweise eine Wandstärke von 1 bis 10 mm auf; das Durchmesserverhältnis vom Stempelaußendurchmesser d_{s,a} des Innenkonturstempels zum Rohrinnen-Durchmesser d_{R,i} des Rohlings ist vorzugsweise größer als eins.

Nachfolgend werden anhand der Zeichnung bevorzugte Ausführungsbeispiele der Erfindung näher erläutert. Im einzelnen zeigen:
- Fig. 1: eine Schnittansicht eines Schrägsitzventiles mit torusförmigem Ventilsitz und Ventilteller in senkrechter Schnittdarstellung,
- Fig. 2a: eine perspektivische Ansicht einer weiteren Ausführungsform eines Schrägsitzventiles mit torusförmigem Ventilsitz und Ventilteller in senkrechter Schnittdarstellung,
- Fig. 2b: eine Seitenansicht einer weiteren Ausführungsform eines Schrägsitzventiles mit torusförmigem Ventilsitz und kegelförmigem Absperrkörper in Schnittdarstellung,
- Fig. 3: eine Seitenansicht des Absperrkörpers gemäß Fig. 2,
- Fig. 4: eine schematische Seitenansicht des Hubventiles gemäß Fig. 2 in senkrechter Schnittdarstellung,
- Fig. 5: eine schematische Seitenansicht des Hubventiles mit einem Lageplan der an dem Absperrkörper wirkenden Kräfte gemäß Fig. 2 in senkrechter Schnittdarstellung,
- Fig. 6a: einen ersten Verfahrensschritt eines HPF-Verfahrens, in dem ein Rohling zu einem T-Stück aufgeweitet wird,
- Fig. 6b: einen zweiten Verfahrensschritt des HPF-Verfahrens, in dem das T-Stück durchsetzt und das verschlossene Ende des T-Stückes abgeschert wird,
- Fig. 6c: einen dritten Verfahrensschritt des HPF-Verfahrens, in dem in das durchsetzte T-Stück die Ventilkontur eingearbeitet wird,
- Fign. 7 und 8: ein weiteres Ausführungsbeispiel der Erfindung in Form eines Durchlaßventils in geschlossener Stellung (Fig. 7) und in geöffneter Stellung (Fig. 8),
- Fign. 9 und 10: ein Ausführungsbeispiel der Erfindung in Form eines Eckventils in geschlossener Stellung (Fig. 9) und in geöffneter Stellung (Fig. 10), wobei das Ventilgehäuse gleich dem Ventilgehäuse des Ventils nach den Fign. 7 und 8 ist, und
- Fign. 11 bis 13: Teillängsschnitte durch weitere Ausführungsbeispiele des erfindungsgemäßen Ventils zur Verdeutlichung unterschiedlicher Möglichkeiten der Ausgestaltung der Ventildichtfläche.

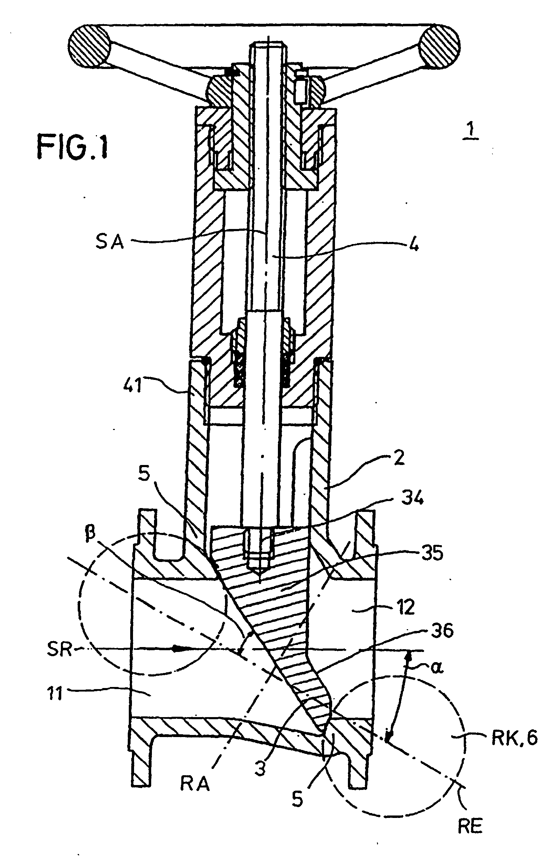

Die in den Fign. 1 bis 5 dargestellten Ausführungsformen eines Schrägsitzventiles 1 haben ein Ventilgehäuse 2 mit einem Ventilsitz 5, einem zuströmseitigen Ventileinlaß 11 und einem abströmseitigen Ventilauslaß 12, der durch einen endseitig an einer im Gehäuse 2 angeordneten Spindel 4 festgelegten Absperrkörper 3 gegen das strömende Medium abgesperrt werden kann. Die Spindel 4 wird bei den dargestellten Ausführungsformen entlang ihrer Spindelachse SA rechtwinklig zur Strömungsrichtung SR bzw. Rohrachse verfahren. In Schließstellung des Ventiles 1 liegt der Absperrkörper 3 an einer balligen, sphärischen bzw. konvex vorgewölbten Ventildichtfläche 50 des Ventilsitzes 5 an, die auf einem imaginären, sich um den Ventilsitz 5 erstreckenden Ringkörper RK mit einem Torus 6 als Oberfläche liegt.

Die Lagebezeichnungen von Punkten MP1,MP2,SP1,SP2,TP1,TP2 bzw. Abschnitten U1,U2,QF1,QF2 auf dem Torus 6 ist an ein imaginäres Koordinatensystem angelehnt, dessen Ursprung im Zentrum des Torus 6 und dessen Achsen auf der Mittelachse RA und der Rotations- oder Mittelebene RE des Ringkörpers RK liegt, wobei "oben" und "unten" die Lage eines Ventiles 1 mit oberseitigem Spindelauszug, wie in Fign. 1, 2a und 2b, 4 und 5 dargestellt, beschreiben.

Der Torus 6 ist in Richtung der zwischen dem Ventileinlaß 11 und Ventilauslaß 12 verlaufenden Hauptströmungsrichtung SR unter einem spitzen Winkel α (Ringkörper-Neigungswinkel) geneigt.

Der Ringkörper-Neigungswinkel α zwischen der Hauptströmung SR auf die Mittelebene RE des Torus 6 hat einen Wert von 0° bis 90°, insbesondere 30° bis 60° und vorzugsweise 40° bis 50°, so daß der Durchströmquerschnitt im Schließbereich des Absperrkörpers 3 eine kreisförmige bzw. elliptische Fläche aufweist.

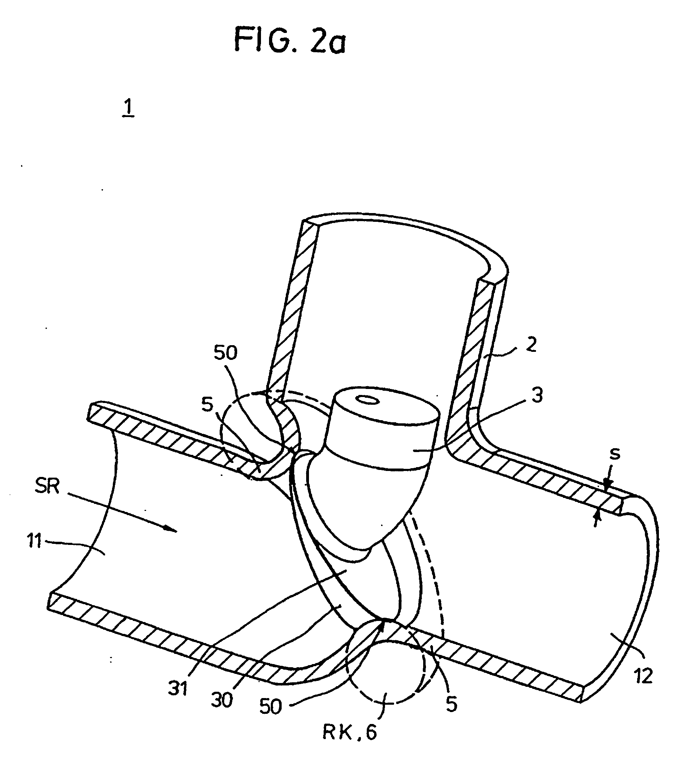

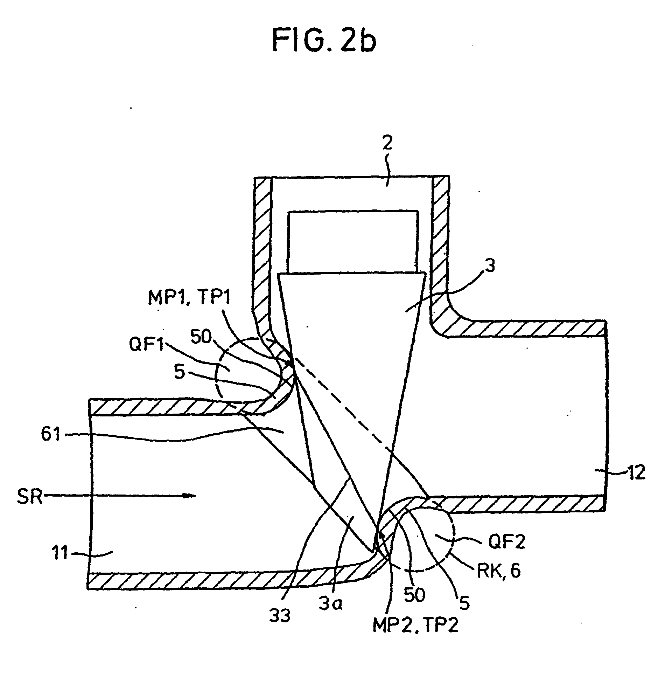

Der Absperrkörper 3 kann ein Ventilteller 31 mit einer konkav gekrümmten Tellerrandfläche als Mantelfläche 30 (siehe Fig. 2a) oder ein Kegelstumpf 3a (siehe Fig. 2b) oder allgemein ein Körper mit einer konkav gekrümmten Mantelfläche sein. Die Kontur des Absperrkörpers 3 ist derart gestaltet, daß seine Mantelfläche 30 in Schließstellung mindestens in einer Dichtlinie 33 an einer auf der Mantelinnenfläche 61 des Ringkörpers 6 umlaufenden Mantellinie 63 anliegt, auf welcher ein erster spindelnaher (oberer) Tangentialpunkt TP1 als ein erster Mantellinienpunkt MP1 und ein zweiter spindelferner (unterer) Tangentialpunkt TP2 als ein zweiter Mantellinienpunkt MP2 angeordnet sind.

In der Schließstellung des Ventiles 1 greift eine in Normalenrichtung einer zuströmseitigen Absperrkörpervorderseite 32 verlaufende Komponente der Druckkraft Fₚ an dem Absperrkörper 31 an, wobei diese Druckkraft Fₚ aus einer Druckdifferenz Δp zwischen der Vorderseite 32 bzw. dem Ventileinlaß 11 und der abströmseitigen Absperrkörperrückseite 36 bzw. dem Ventilauslaß 12 resultiert.

Fig. 1 zeigt ein Schrägsitzventil 1 mit einem Ventilsitz 5, bei welchem der Ventileinlaß 11 und der Ventilauslaß 12 auf einer in Strömungsrichtung SR verlaufenden Achse liegen und deren lichter Durchgang im Schließbereich des Absperrkörpers 3 der Nennweite entspricht. Der Ventilsitz 5 weist eine Ventildichtfläche 50 auf, die gleich einem Teil der torusförmigen Fläche ist.

Die Absperrkörperrückseite 36 ist an das Ventilgehäuse 2 angepaßt, so daß die Rückseite 36 im Öffnungszustand des Ventiles 1 formschlüssig an der Gehäuseinnenwandung anliegt.

Der Absperrkörper 3 ist im Bereich der Aufnahme 34 für die Spindel 4 verstärkt, d.h. die Form geht von der scheibenartigen Tellerform in einen kompakten Block 35 mit der Aufnahme 34 über.

In Fig. 2a ist eine Ausführungsform eines Schrägsitzventiles 1 mit einem torusförmigen Ventilsitz 5 dargestellt, deren lichter Durchmesser im Schließbereich des Absperrkörpers 3 reduziert ist und dessen Ventileinlaß 11 und der Ventilauslaß 12 in Strömungsrichtung SR koaxial zueinander angeordnet sind.

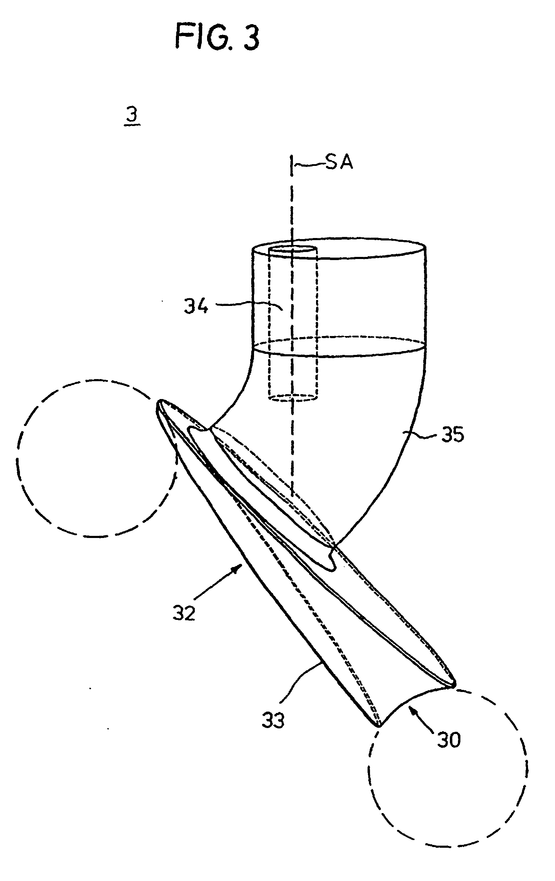

Der Absperrkörper 3 (siehe hierzu Fig. 3) wird schließseitig von einem scheiben- und keilförmigen Ventilteller gebildet, wobei die konkav gekrümmte Tellerrandfläche die Ventiltellerdichtfläche bildet (siehe Fläche 30 in Fig. 3). Der Ventilteller mit seiner umlaufenden Dichtfläche liegt in der Schließstellung am spindelnahen, oberen Abschnitt des Ventilsitzes 5 nahezu in einer Linie und am spindelfernen, unteren Abschnitt des Ventilsitzes 5 in einer Fläche an.

Spindelseitig weist der Absperrkörper 3 eine Verstärkung 35 in Form eines gekrümmten, einen Schaft bildenden Ansatzstückes 35 zur Aufnahme der Spindel 4 auf.

Fig. 2b zeigt ebenfalls eine Ausführungsform eines Schrägsitzventiles 1 mit einem einen Teil der Oberfläche eines Torus entsprechenden Ventilsitz 5, wie in Fig. 2a dargestellt, jedoch wird der Absperrkörper 3 schließseitig von einem Kegelstumpf 3a gebildet. In der Schließstellung ragt der Absperrkörper 3,3a in den Torus 6 und dichtet in der Dichtlinie 33, welche mit der Mantellinie 63 des Torus 6 als Berührungslinie 63 identisch ist, das Ventil 1 gegen das strömende Medium ab.

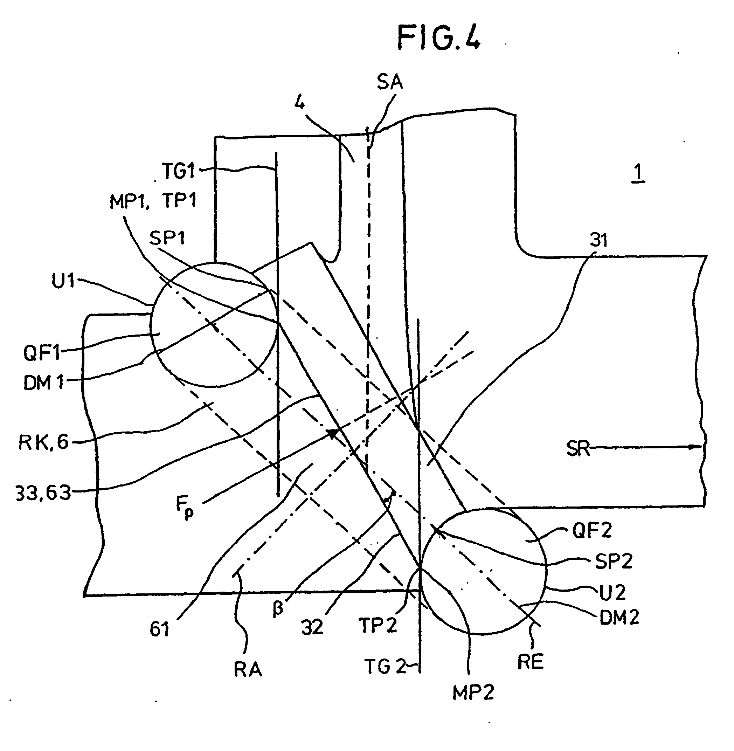

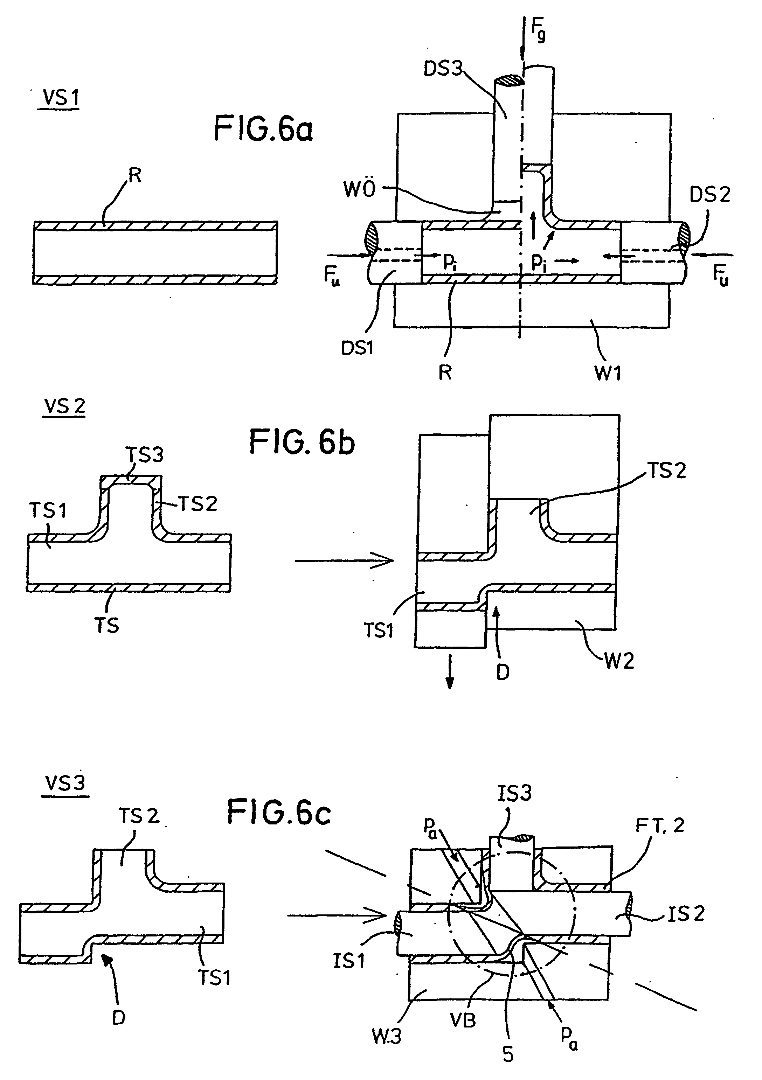

Anhand von Fig. 4 wird die Abhängigkeit der Kontur des Ventiltellers 31 mit seiner Dichtfläche 30 und dem imaginären (torusförmigen) Ringkörper RK, 6, der sich ringförmig um den Ventilsitz 5 des Gehäuses 2 erstreckt, erläutert. Das Ventilgehäuse 2, dessen Wanddicke s über den gesamten Querschnitt einen konstanten Wert hat, ist mittels eines Herstellungsverfahrens für Armaturengehäuse gefertigt, dessen Verfahrensschritte in den Fign. 6a bis 6c bildlich dargestellt sind. Die Ventiltellervorderseite 32 ist zu der Mittelebene RE des Ringkörpers RK,6 unter einem spitzen Winkel β (Tellerneigungswinkel) geneigt.

In der Schließstellung des Ventiles 1 liegt der Ventilteller 31 mit einer vorderseitigen Dichtkante 33 der Ventiltellerdichtfläche 30 an einer auf einer Mantelinnenfläche 61 des Torus 6 umlaufenden Mantellinie 63 an, wobei auf dieser Mantellinie 63 ein erster oberer Mantellinienpunkt MP1 und ein zweiter unterer Mantellinienpunkt MP2 angeordnet sind.

Bei einem senkrechten Schnitt durch das Ventil 1 wird die gesamte Querschnittsfläche des Ringkörpers RK,6 von zwei Kreisflächen (Querschnittsflächen) QF1,QF2 gebildet, von denen eine erste Querschnittsfläche QF1 spindelnah, also oberhalb der Mittelachse RA und eine zweite Querschnittsfläche QF2 spindelfern, also unterhalb der Mittelachse RA liegen.

Der erste Mantellinienpunkt MP1 befindet sich auf einem ersten Umfangsabschnitt U1 der ersten oberen Querschnittsfläche QF1, welcher zwischen einem ersten Schnittpunkt SP1 und einem ersten Tangentialpunkt TP1 verläuft. Der erste Schnittpunkt SP1 ist ein spindelseitiger Schnittpunkt SP1 eines ersten, in Wirkrichtung der Druckkraft Fₚ verlaufenden Durchmessers DM1 der oberen Querschnittsfläche QF1 mit deren Umfang U1.

Der erste Tangentialpunkt TP1 ist ein Berührungspunkt einer parallel zur Spindelachse SA verlaufenden Tangente TG1 an die Mantelinnenfläche 61 des oberen Torusabschnittes in der ersten Querschnittsfläche QF1.

Der zweite Mantellinienpunkt MP2 liegt auf einem zweiten Umfangsabschnitt U2 der zweiten, unteren Querschnittsfläche QF2 auf, welcher einen zweiten Schnittpunkt SP2 und einen zweiten Tangentialpunkt TP2 miteinander verbindet.

Der zweite Schnittpunkt SP2 ist ein mantelinnenseitig liegender Schnittpunkt SP2 eines zweiten, in der Mittelebene RE angeordneten Durchmessers der unteren Querschnittsfläche QF2 mit deren Umfang U2.

Der zweite Tangentialpunkt TP2 ist der Berührpunkt einer parallel zur Spindelachse SA verlaufenden Tangente TG2 an die Mantelinnenfläche 61 des unteren Torusabschnittes in der zweiten Querschnittsfläche QF2.

Der Ventilteller 31 hinterschneidet den Ventilsitz 5 im unteren Bereich in Wirkrichtung der Druckkraft Fₚ. Im oberen Bereich des Ventilsitzes 5 hingegen liegt der Ventilteller 31 oberseitig an der Sitzfläche 50 auf.

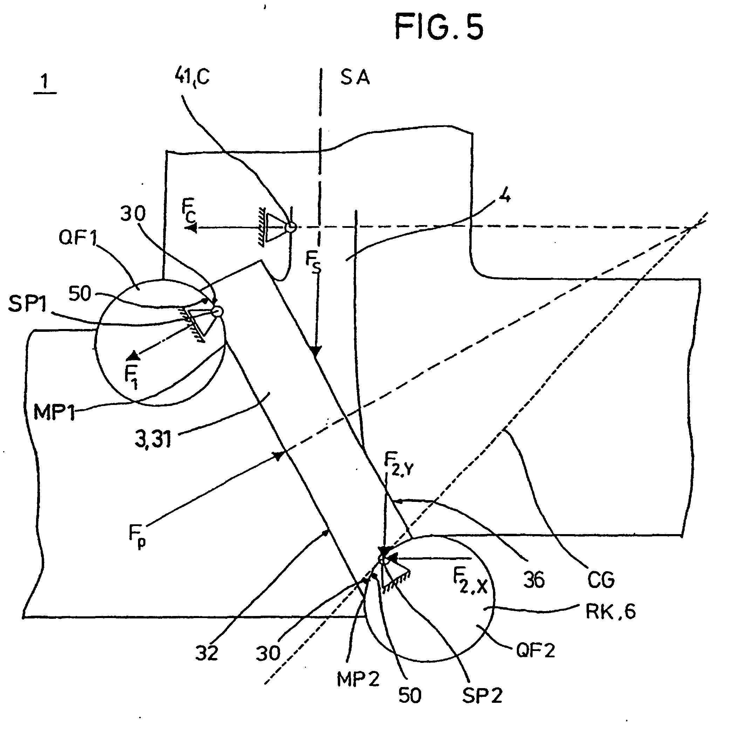

In dem Lageplan der Kräfte gemäß Fig. 5 ist das Zusammenwirken der an dem Ventilsitz 5 und der Spindel 4 mit Ventilteller 31 angreifenden Kräfte (Fₚ,Fₛ) dargestellt.

Für die Untersuchung der Kraftverhältnisse an dem Ventilteller 31 wird zur Vereinfachung der Kraftverlauf an einem starren Balken erläutert, wobei Reibungskräfte vernachlässigt werden. Die Hinterschneidung des Ventilsitzes 5 durch den Ventilteller 31 in Richtung der Druckkraft Fₚ bewirkt, daß der Absperrkörper 3 im zweiten Schnittpunkt SP2 als einem Auflagerpunkt zweiwertig und an der Spindelführung 41 als einem weiteren Auflagerpunkt C einwertig gelagert ist; somit werden an den Auflagerpunkten die Kräfte F_{2,x}, F_{2,y} und F_{c} angetragen. Die Lagerkraft F_{c} ist eine axial zur Spindelachse SA gerichtete Reaktionskraft auf die Druckkraft Fₚ.

Da die sich aus dem Differenzdruck ergebende Andrückkraft Fₚ und die Spindelachse SA spitzwinklig zueinander angeordnet sind, ist das Ventil 5 selbstabdichtend, d.h. der Absperrkörper ist ohne wirkende Spindelkraft Fₛ in axialer Richtung SA in dem zweiten Schnittpunkt SP2 und dem Auflagerpunkt C stabil gelagert.

Die am Absperrkörper 3 angreifende Andrückkraft Fₚ steht im spindelfernen Bereich der Dichtfläche 30,50 unterhalb der Spindelachse SA mit den Kraftkomponenten F_{2,x} und F_{2,y} im zweiten Auflagerpunkt SP2 und der rechtwinklig auf die Spindelachse SA wirkenden Lagerkraft F_{c} im Gleichgewicht.

Da sich der Ventilteller 31 im unteren Bereich des Ventilsitzes 5 im Auflager SP2 und an der Spindelführung 41 rechtwinklig zur Spindelachse SA abstützt, wird der spindelnahe Bereich des Absperrkörpers 3 oberhalb der Spindelachse SA nicht durch die Druckkraft Fₚ von dem Ventilsitz 5 weggedrückt.

Eine wirkende Spindelkraft würde sich gleichmäßig auf die Schnittpunkte SP1,SP2 aufteilen, ohne daß bei steigendem Druck eine zusätzliche Druckkraft Fₚ Einfluß auf die Dichtigkeit zwischen Ventilsitzdichtfläche 50 und Ventiltellerdichtfläche 30 bzw. die daraus resultierende Flächenpressung hat.

Die erfindungsgemäße Anordnung des Ventiltellers 31 erlaubt eine Selbstzentrierung des Tellers 31, weil die Stützkräfte F_{2,x} und F_{2,y} im unteren Bereich des Ventiltellers ausreichend groß sind, um die entgegengesetzt wirkenden Reibungskräfte im oberen Ventiltellerbereich zu überwinden und den Teller in eine optimale Position zu schieben. Die Selbstzentrierung wird durch einen größeren Torusdurchmesser begünstigt, da dann die Ventilsitzdichtfläche 50 im oberen Torusabschnitt QF1 steiler zur Spindelachse SA verläuft.

In den Fign 6a bis 6c werden die Verfahrensschritte eines dreistufigen Herstellungsverfahren VS1,VS2,VS3 für die Fertigung eines Schrägsitzventiles 1 mit einer (torusförmigen) Ventilsitzfläche gemäß Fig. 4 aufgezeigt.

Bei der Fertigung eines Ventilgehäuses 2 nach dem Hochdruckumformverfahren (HPF) wird in einem ersten Verfahrensschritt VS1 (siehe Fig. 6a) zur Grobformgebung der Außenkontur des Ventilgehäuses 2 ein Rohling R zu einem T-Stück TS mit einem Durchgangsstück TS1 und einem endseitig verschlossenen Abzweig TS2 aufgeweitet. Zuerst wird der Rohling R in eine ein- oder mehrteilige Werkzeugform W1, welche die Außenform des T-Stückes TS aufweist, eingelegt und anschließend nach dem Schließen der Werkzeugform W1 durch die an den Stirnflächen des Rohlings R von Druckstempeln DS1,DS2 erzeugten Umformkräfte F_{U} gestaucht. Das Rohrmaterial wird von einem außerhalb erzeugten, am Rohling R anliegenden Innendruck pᵢ durch Streck- und Ziehvorgänge in eine werkzeugseitig für die Bildung des T-Steges TS1 vorgesehene Öffnung WÖ gedrückt und so in die gewünschte Form gebracht. Ein in der Werkzeugöffnung WÖ angeordneter Druckstempel DS3 ist ein mit der Kraft F_{G} beaufschlagter Gegenhalter DS1, der eine gleichmäßige Ausbildung des Abzweiges TS2 unterstützt.

Als Rohlinge R werden vorzugsweise längsgeschweißte Rohre verwendet.

Um einen ausreichend hohen Innendruck pᵢ zu erzeugen, wird der Rohling R vorzugsweise mit einem inkompressiblen Medium gefüllt.

Das T-Stück (TS) wird in einem zweiten Verfahrensschritt VS2 quer zu seiner Längsrichtung des Durchgangsstückes TS1 im Bereich des Abzweiges TS2 in einem Werkzeuggesenk WS2 durchsetzt. Der Bereich des Durchsatzes D bildet die Grundform für den schrägen Ventilsitz 5. Das geschlossene Ende (Deckel) des Abzweiges TS2 wird abgeschert.

In einem dritten Verfahrensschritt VS3 wird mittels Außenhochdruckumformen die Ventilsitzkontur 5 durch Beaufschlagung der Außenseite des T-Stückes TS mit Außenhochdruck pₐ an dem innenliegenden Werkzeug IS1,IS2,IS3 abgeformt. Hierzu ist ein dreiteiliges Werkzeug IS1,IS2,IS3 in den Abzweig TS2 und die endseitig offenen Abschnitte des Durchgangsstückes TS2 eingeschoben. Der außenseitig an dem Werkstück TS anliegende Druck pₐ wird durch Kompression eines inkompressiblen Medium erzeugt, wobei die Kraft von in Druckleitungen des Werkzeuges W3 angeordneten Stempeln aufgebracht wird.

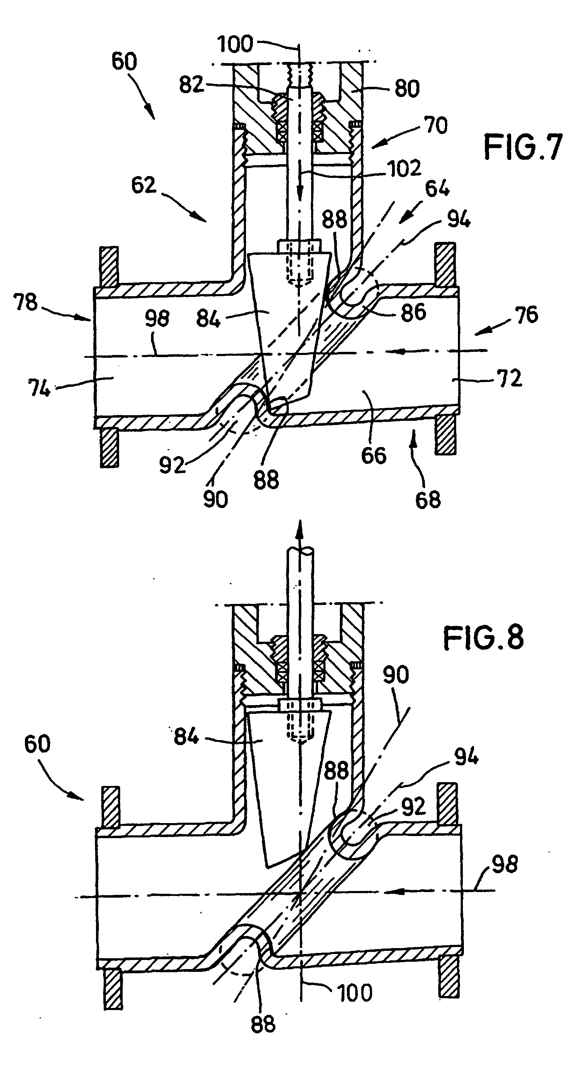

Nachfolgend werden anhand der Fign. 7 bis 13 weitere Ausführungsbeispiele der Erfindung näher erläutert. Dabei gilt, daß die zuvor erwähnten Überlegungen betreffend die Kräfteverhältnisse und die relative Anordnung der einzelnen Bestandteile des Ventils auch bei den nachfolgend erwähnten Ausführungsbeispielen anzuwenden sind.

In den Fign. 7 bis 10 sind zwei Ausführungsbeispiele 60, 60' im Längsschnitt dargestellt, wobei beide Ventile ein und dasselbe Ventilgehäuse 62 aufweisen. Während das Ventil 60 als Durchgangsventil ausgebildet ist, handelt es sich bei dem Ventil 60' um ein Eckventil.

Das Ventilgehäuse 62 des im Längsschnitt in Fig. 7 in der geschlossenen Stellung und in der Fig. 8 in der Offenstellung gezeigten Ventils 60 weist ein T-förmiges Rohrstück 64 auf, das aus einem den Durchlaßkanal 66 bildenden Durchgangs-Rohrstück 68 und einem Abzweig-Rohrstück 70 besteht. Das Ventilgehäuse 62 besteht aus Kunststoff. Die einander gegenüberliegenden axialen Enden 72,74 des Durchgangs-Rohrstücks 68 bilden den Einlaß 76 bzw. den Auslaß 78 des Ventils 60. An das Abzweig-Rohrstück 70 schließt sich eine Halterung 80 für ein Bewegungsorgan in Form einer Spindel 82 an, die an ihrem einen Ende einen als abgeschrägten Kegelstumpf ausgebildeten Absperrkörper 84 trägt. Durch Drehen der Spindel 82 (das zugehörige Drehorgan ist in den Fign. 7 bis 10 nicht dargestellt) wird der Absperrkörper 84 rechtwinklig in den Durchlaßkanal 66 hineinbewegt.

Im Durchlaßkanal 66 ist ein Ventilsitz 86 ausgebildet, der eine Ventildichtfläche 88 trägt. Die Ventildichtfläche 88 umgibt eine Fläche, die in einer Ebene 90 angeordnet ist, welche unter einem spitzen Winkel zum Durchlaßkanal 66 verläuft. Die Ventildichtfläche 88 ist Teil der Oberfläche eines imaginären Ringkörpers 92, dessen Mittelebene 94 unter einem spitzen Winkel zur Ebene 90 verläuft. Senkrecht zur Mittelebene 94 verläuft die Mittelachse 96 des Ringkörpers 92. Der Ringkörper 92 steht unter einem Winkel von etwa 45° zur Längsachse 98 des Durchlaßkanals 66. Diese Längsachse 98 schneidet den Schnittpunkt der Mittelebene 94 mit der Mittelachse 96. Durch diesen Schnittpunkt hindurch verläuft auch die Längsachse 100 des Abzweig-Rohrstücks 70.

Wie in der Fig. 7 gezeigt, ist der Ventilsitz 86 durch eine sickenförmige Verformung der Wandung des Durchgangs-Rohrstücks 68 ausgebildet. Durch diese sickenartige Verformung entsteht eine nach innen gerichtete Vorwölbung im Durchlaßkanal 66, deren Oberfläche der Innenseite eines Rings entspricht. Der Ringkörper 92 selbst ist oval. Die Hauptachsen dieses Ovals sind derart relativ zueinander bemessen, daß in Bewegungsrichtung 102 des Absperrkörpers 84 betrachtet sich eine kreisrunde Innenfläche ergibt, in die der kegelstumpfförmige Absperrkörper 84 hineintaucht, um den Durchlaßkanal 66 abzusperren.

In der Absperrposition gemäß Fig. 7 liegt der Absperrkörper 84 mit seiner Außenfläche an der Ventildichtfläche 88 des Ventilsitzes 86 an. Hierbei kommt es zu Hinterschneidungen zwischen dem Absperrkörper 84 und dem Ventilsitz 86.

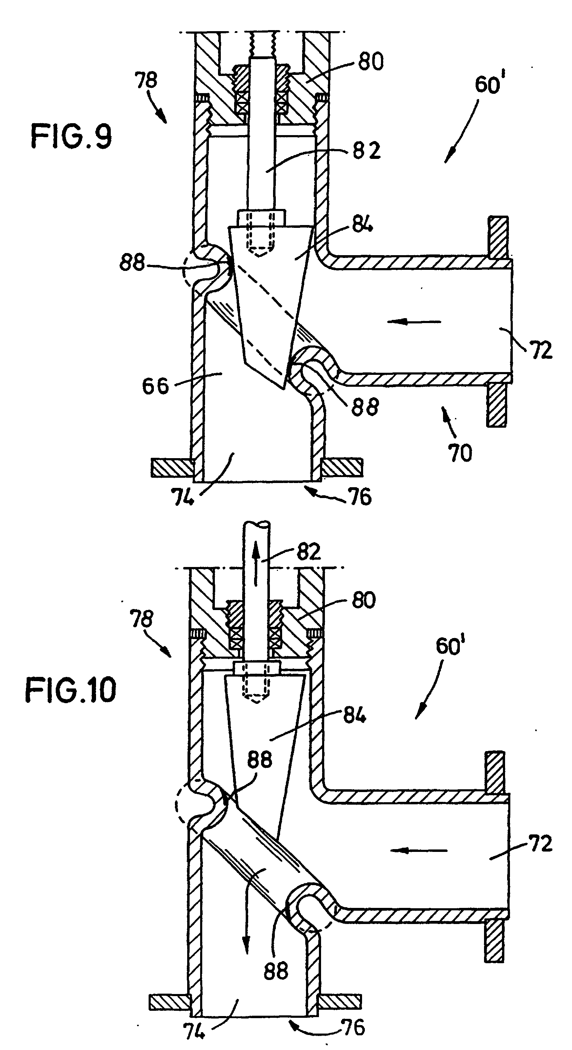

Der Vorteil der Ausbildung des Ventilgehäuses 62 so, wie es in den Fign. 7 und 8 dargestellt ist, besteht darin, daß dieses Ventilgehäuse 62 sowohl für das Durchgangsventil 60 der Fign. 7 und 8 als auch für das Eckventil 60' der Fign. 9 und 10 eingesetzt werden kann. Bei beiden Varianten werden unterschiedliche Oberflächenbereiche des Ventilsitzes 86 zur Abdichtung zwischen dem Gehäuse 62 und dem Absperrkörper 84 verwendet. Soweit die Einzelteile des Eckventils 60' denen des Durchgangsventils 60 der Fign. 7 und 8 entsprechen, sind sie in den Fign. 9 und 10 mit den gleichen Bezugszeichen versehen.

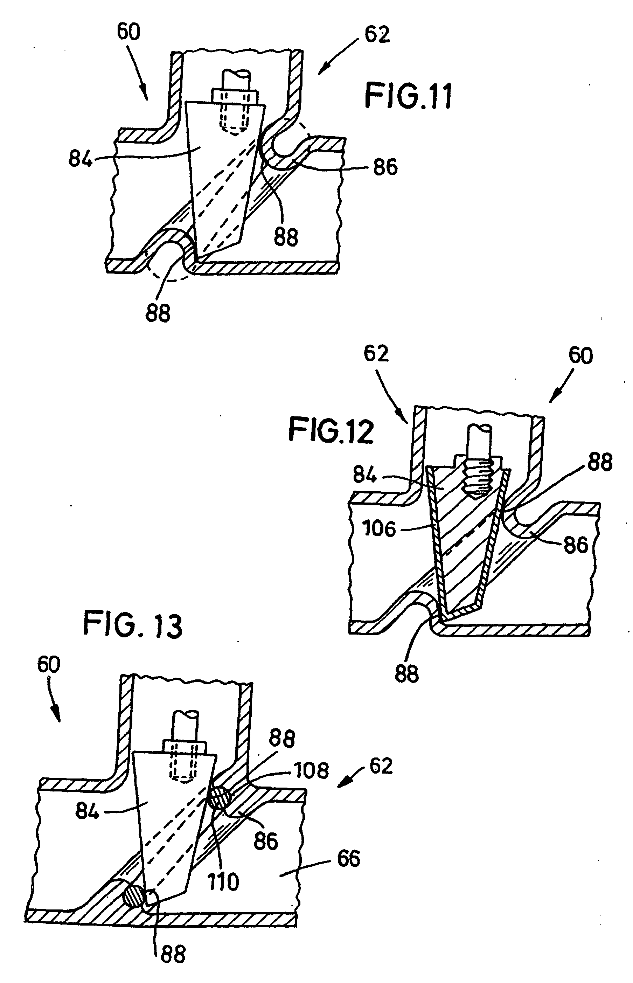

In den Fign. 11 bis 13 sind unterschiedliche Ausgestaltungen für die Ausbildung der Dichtflächen zwischen dem Ventilsitz und dem Absperrkörper gezeigt. Auch bei diesen Figuren gilt, daß die den Teilen der Ventile 60 und 60' der Fign. 7 bis 10 gleichenden Teile in den Fign. 11 bis 13 mit den gleichen Bezugszeichen versehen sind.

Gemäß Fig. 11 erfolgt die Abdichtung des Ventils 60 dadurch, daß das Ventilgehäuse 62 aus Kunststoff besteht. Herstellungsbedingt (Herstellung des Ventilgehäuses 62 beispielsweise als Spritzgußteil oder durch Hochdruckumformverfahren) bildet sich am Ventilsitz 86 eine Ventildichtfläche 88, deren Güte ausreicht, um direkt mit der Außenseite des Absperrkörpers 84 zum Abdichten des Ventils 60 zusammenzuwirken. Anstelle von Kunststoff können auch andere Materialien, wie z.B. Metall eingesetzt werden.

Im Ausführungsbeispiel gemäß Fig. 12 ist der Absperrkörper 84 mit einem Materialüberzug 106 versehen, der zusammen mit der Ventildichtfläche 88 des Ventilsitzes 86 zur Abdichtung des Ventils 60 zusammenwirkt. Der Materialüberzug 106 kann elastisch verformbar sein. Das Gehäuse 62 des Ventils 60 gemäß Fig. 12 besteht aus Metall oder aus Kunststoff.

Bei dem Ausführungsbeispiel gemäß Fig. 13 besteht das Gehäuse 62 des Ventils 60 aus Metall. In der den Ventilsitz 86 bildenden Innenvorwölbung des Durchgangskanals 66 ist eine in etwa unter 45° geneigte Aufnahmenut 108 ausgebildet, in die ein Oval-Dichtkörper 110 aus elastischem Kunststoffmaterial eingesetzt ist. Dieser Oval-Ringkörper 110 dichtet zusammen mit dem Absperrkörper 84 ab. Auch an diesem Ringkörper 110 bildet sich eine Dichtfläche 88, die lediglich einen Teil der Oberfläche des Ringkörpers 110 einnimmt und, wie bei den übrigen Ausführungsbeispielen des Ventils gemäß den Fign. 7 bis 12, im wesentlichen durch Linienberührung den Abdichtkörper 84 kontaktiert und somit das Ventil 60 abdichtet.

## Patentansprüche

1. Ventil mit
- einem Ventilgehäuse (2;62) mit einem Ventileinlass (11;76) und einem Ventilauslass (12;78) und einem Durchlasskanal (66), der sich durch das Ventilgehäuse (2;62) hindurch zwischen dem Ventileinlass (11;76) und dem Ventilauslass (12;78) erstreckt,
- einem im Durchlasskanal (66) angeordneten Ventilsitz (5;86) mit einer Ventildichtfläche (50;88) und
- einem Absperrkörper (3;84), der zum Absperren des Durchlasskanals (66) durch Anlage an der Ventildichtfläche (50;88) zumindest teilweise in den Ventilsitz (5;86) hinein bewegbar ist, und zwar entlang einer Bewegungsrichtung (102), die in einem spitzen Winkel zu derjenigen Ebene (90) verläuft, in der der Ventilsitz (5;86) angeordnet ist,
**dadurch gekennzeichnet,**
- **dass** die Ventildichtfläche (50;88) des Ventilsitzes (5;86) ballig und Teil der Oberfläche eines imaginären Ringkörpers (6;92) ist,
- **dass** der Ringkörper (6;92) eine dem Ventileinlass (11;76) zugewandte Unterseite und eine dem Ventilauslass (12;78) zugewandte Oberseite aufweist und dass die Ventildichtfläche (50;88) von Teilen der Oberfläche des imaginären Ringkörpers (6;92) gebildet ist, die teilweise auf der Oberseite, teilweise auf der Unterseite und teilweise an der Innenseite des imaginären Ringkörpers (6;92) zwischen dessen Ober- und Unterseite angeordnet sind,
- **dass** die Ebene (90), in der der Ventilsitz (5;86) angeordnet ist, in einem spitzen Winkel zu derjenigen Ebene (94) verläuft, in der der Ringkörper (6;92) angeordnet ist, und
- **dass** der Absperrkörper (3;84) die Ventilsitzebene (90) und die Ringkörperebene (94) bei Anlage an der Ventildichtfläche (50;88) durch-dringt.

2. Ventil nach Anspruch 1, **dadurch gekennzeichnet, dass** der Winkel zwischen 10° und 30° und vorzugsweise etwa 20° beträgt.

3. Ventil nach Anspruch 1 oder 2, **dadurch gekennzeichnet, dass** der imaginäre Ringkörper (6;92) ein kreisrunder, elliptischer oder ovaler Ringkörper mit kreisförmigem, oder anderweitig rundem Querschnitt ist.

4. Ventil nach einem der Ansprüche 1 bis 3, **dadurch gekennzeichnet, dass** die Bewegungsrichtung (102) des Absperrkörpers (3;84) im wesentlichen rechtwinklig zur Erstreckung (98) des Durchlasskanals (66) verläuft.

5. Ventil nach einem der Ansprüche 1 bis 4, **dadurch gekennzeichnet, dass** die Ebene (90), in der der Ventilsitz (5;86) angeordnet ist, unter einem spitzen Ventilsitz-Neigungswinkel zur Erstreckung (98) des Durchlasskanals (66) verläuft.

6. Ventil nach einem der Ansprüche 1 bis 5, **dadurch gekennzeichnet, dass** die Ebene (94), in der der Ringkörper (6;92) angeordnet ist, unter einem spitzen Ringkörper-Neigungswinkel zur Erstreckung (98) des Durchlasskanals (66) verläuft.

7. Ventil nach Anspruch 6, **dadurch gekennzeichnet, dass** der Ringkörper-Neigungswinkel zwischen 30° und 60°, insbesondere zwischen 40° und 50° liegt und vorzugsweise im wesentlichen 45° beträgt.

8. Ventil nach einem der Ansprüche 1 bis 7, **dadurch gekennzeichnet, dass** der Absperrkörper (3;84) als spitzer, stumpfer oder abgeschrägter Kegel ausgebildet ist und der imaginäre Ringkörper (6;92) ein elliptischer Ring mit kreisförmigem Querschnitt ist, wobei der imaginäre Ringkörper (6;92) derart zur Bewegungsrichtung (102) des Absperrkörpers (3;84) geneigt ist, dass er bei Betrachtung in Bewegungsrichtung (102) des Absperrkörpers (3;84) eine kreisrunde Fläche umschließt.

9. Ventil nach einem der Ansprüche 1 bis 8, **dadurch gekennzeichnet, dass** der Ventilsitz (5;86) integraler Bestandteil des Ventilgehäuses (2;62) ist.

10. Ventil nach einem der Ansprüche 1 bis 9, **dadurch gekennzeichnet, dass** das Ventilgehäuse (2;62) ein T-Rohrstück (64) mit einem im wesentlichen geradlinig durchgehenden Durchgangs-Rohrstück (68) und einem dazu im wesentlichen quer verlaufenden Abzweig-Rohrstück (70) ist und dass das Durchgangs-Rohrstück (68) an seiner Innenseite einen umlaufenden vorstehenden sphärischen Flächenabschnitt aufweist, der in einer unter einem Winkel von 45° zur Längsachse (98,100) sowohl des Durchgangs-Rohrstücks (68) als auch des Abzweig-Rohrstücks (70) geneigten Ebene liegt und auf dem die Ventildichtfläche (50;88) liegt, wobei der sphärische Flächenabschnitt entlang eines der beiden Eckenbereiche zwischen dem Durchgangs-Rohrstück (68) und dem Abzweig-Rohrstück (70) verläuft.

11. Ventil nach Anspruch 10, **dadurch gekennzeichnet, dass** der sphärische Flächenabschnitt durch lokale sickenförmige Verformung des T-Rohrstücks (64) gebildet ist.

12. Ventil nach einem der Ansprüche 1 bis 11, **dadurch gekennzeichnet, dass** das Ventilgehäuse (2;62) aus Kunststoff besteht.

13. Ventil nach einem der Ansprüche 1 bis 12, **dadurch gekennzeichnet, dass** das Ventilgehäuse (2;62) ein Spritzgussteil ist.

14. Ventil nach einem der Ansprüche 1 bis 13, **dadurch gekennzeichnet, dass** das Ventilgehäuse (2;62) durch spanlose Umformung eines Rohrstückes gebildet ist.

## Claims

1. A valve comprising
- a valve housing (2; 62) with a valve inlet (11; 76), a valve outlet (12; 78) and a passage (66) extending through the valve housing (2; 62) from the valve inlet (11; 76) to the valve outlet (12; 78),
- a valve seat (5; 86) provided in the passage (66) and comprising a valve sealing surface (50; 88), and
- a blocking element (3; 84) adapted to be moved at least partly into the valve seat (5; 86) for blocking the passage (66) by abutment on the valve sealing surface (50; 88), the blocking element being moved along a direction (102) extending under an acute angle to the plane (90) in which the valve seat (5; 86) is arranged,
**characterized in that**
- the valve sealing surface (50; 88) of the valve seat (5; 86) is bulbous in shape and forms a part of the surface of an imaginary annular member (6; 92),
- the annular member (6; 92) has a bottom face facing the valve inlet (11; 76) and a top face facing the valve outlet (12; 78), and the valve sealing surface (50; 88) is formed by parts of the surface of the imaginary annular member (6; 92) located in part on the top face and the bottom face, respectively, and, again in part, on the inner surface of the imaginary annular member (6; 92) between the top and the bottom faces thereof,
- the plane (90) in which the valve seat (5; 86) is arranged, extends under an acute angle to the plane (94) in which the annular member (6; 92) is located, and
- the blocking element (3; 84) passes through the valve seat plane (90) and the annular member plane (94) when in abutment on the valve seat surface (50; 88).

2. The valve of claim 1, **characterized in that** the angle is between 10° and 30°, preferably about 20°.

3. The valve of claim 1 or 2, **characterized in that** the imaginary annular member (6; 92) is a circular, elliptic or oval annular member having a circular or otherwise round cross section.

4. The valve of one of claims 1 to 3, **characterized in that** the direction of movement (102) of the blocking element (3, 84) is substantially rectangular to extension (98) of the passage (66).

5. The valve of one of claims 1 to 4, **characterized in that** the plane (90) in which the valve seat (5; 86) is located extends under an acute angle of inclination of the valve seat to the extension (98) of the passage (66).

6. The valve of one of claims 1 to 5, **characterized in that** the plane (94) in which the annular member (6; 92) is located extends under an acute angle of inclination of the annular member to the extension (98) of the passage (66).

7. The valve of claim 6, **characterized in that** the angle of inclination of the annular member is between 30° and 60°, in particular between 40° and 50°, and preferably substantially about 45°.

8. The valve of one of claims 1 to 7, **characterized in that** the blocking element (3; 84) is a pointed, blunt or beveled cone, and the imaginary annular member (6; 92) is an elliptic ring with a circular cross section, the imaginary annular member (6; 92) being inclined such with respect to the direction of movement (102) of the blocking element (3; 84) that it encloses a circular area, seen in the direction of movement (102) of the blocking element (3; 84).

9. The valve of one of claims 1 to 8, **characterized in that** the valve seat (5; 86) is an integral part of the valve housing (2; 62).

10. The valve of one of claims 1 to 9, **characterized in that** the valve housing (2; 62) is a T-pipe (64) with a substantially straight passage pipe portion (68) and a branch pipe portion (70) substantially rectangular to the same, and that the passage pipe portion (68) is provided with an inward protruding continuous annular surface section situated in a plane inclined under an angle of 45° to the longitudinal axis (98, 100) of both the passage pipe portion (68) and the branch pipe portion (70) and on which surface section the valve sealing surface (50; 88) lies, the spherical surface section extending along one of the two corner portions between the passage pipe portion (68) and the branch pipe portion (70).

11. The valve of claim 10, **characterized in that** the spherical surface section is formed by locally deforming the T-pipe (64) in a bead-like manner.

12. The valve of one of claims 1 to 11, **characterized in that** the valve housing (2; 62) is made of plastics material.

13. The valve of one of claims 1 to 12, **characterized in that** the valve housing (2; 62) is an injection molded part.

14. The valve of one of claims 1 to 13, **characterized in that** the valve housing (2; 62) is formed by a non-cutting forming of a pipe piece.

## Revendications

1. Soupape avec
- un boîtier de soupape (2 ; 62) comprenant une entrée de soupape (11 ; 76), une sortie de soupape (12 ; 78) et un canal de passage (66), qui s'étend à travers le boîtier de soupape (2 ; 62) entre l'entrée de soupape (11 ; 76) et la sortie de soupape (12 ; 78),
- un siège de soupape (5 ; 86) disposé dans le canal de passage (66) comprenant une surface d'étanchéité de soupape (50 ; 88) et
- un élément d'obturation (3 ; 84) qui, pour obturer le canal de passage (66) par l'intermédiaire d'un appui sur la surface d'étanchéité de soupape (50 ; 88), peut être déplacé au moins partiellement à l'intérieur du siège de soupape (5 ; 86), et ceci le long d'une direction de déplacement (102), qui s'étend selon un angle aigu par rapport au plan (90), sur lequel est disposé le siège de soupape (5 ; 86), **caractérisé**
- **en ce que** la surface d'étanchéité de soupape (50 ; 88) du siège de soupape (5 ; 86) est bombée et constitue une partie de la surface d'un corps annulaire imaginaire (6 ; 92),
- **en ce que** le corps annulaire (6 ; 92) comprend une face inférieure dirigée vers l'entrée de soupape (11 ; 76) et une face supérieure dirigée vers la sortie de soupape (12 ; 78), la surface d'étanchéité de soupape (50 ; 88) étant formée de parties de la surface du corps annulaire imaginaire (6 ; 92), qui sont disposées partiellement sur le côté supérieur, partiellement sur le côté inférieur et partiellement sur le côté intérieur du corps annulaire imaginaire (6 ; 92) entre son côté supérieur et son côté inférieur,
- **en ce que** le plan (90), sur lequel est disposé le siège de soupape (5 ; 86), s'étend selon un angle aigu par rapport au plan (94), sur lequel est disposé le corps annulaire (6 ; 92) et
- **en ce que** l'élément d'obturation (3 ; 84) traverse le plan du siège de soupape (90) et le plan du corps annulaire (94) lorsqu'il est en contact avec la surface d'étanchéité de soupape (50 ; 88).

2. Soupape selon la revendication 1, **caractérisée en ce que** l'angle est compris entre 10° et 30° et est de préférence d'environ 20°.

3. Soupape selon la revendication 1 ou 2, **caractérisée en ce que** le corps annulaire imaginaire (6 ; 92) est un corps annulaire circulaire, elliptique ou ovale avec une section circulaire ou une autre section ronde.

4. Soupape selon l'une des revendications 1 à 3, **caractérisée en ce que** la direction de déplacement (102) de l'élément d'obturation (3 ; 84) s'étend sensiblement à angle droit par rapport à l'extension (98) du canal de passage (66).

5. Soupape selon l'une des revendications 1 à 4, **caractérisée en ce que** le plan (90), sur lequel est disposé le siège de soupape (5 ; 86), s'étend selon un angle aigu d'inclinaison de siège de soupape par rapport à l'extension (98) du canal de passage (66).

6. Soupape selon l'une des revendications 1 à 5, **caractérisée en ce que** le plan (94), sur lequel est disposé le corps annulaire (6 ; 92), s'étend selon un angle aigu d'inclinaison du corps annulaire par rapport à l'extension (98) du canal de passage (66).

7. Soupape selon la revendication 6, **caractérisée en ce que** l'angle d'inclinaison du corps annulaire est situé entre 30° et 60°, en particulier entre 40° et 50° et est de préférence sensiblement de 45°.

8. Soupape selon l'une des revendications 1 à 7, **caractérisée en ce que** le corps d'obturation (3 ; 84) est réalisé sous forme de cône pointu, tronqué ou chanfreiné et **en ce que** le corps annulaire imaginaire (6 ; 92) est une bague elliptique de section circulaire, le corps annulaire imaginaire (6 ; 92) étant incliné de telle manière par rapport à la direction de déplacement (102) de l'élément d'obturation (3 ; 84) qu'en le regardant dans la direction de déplacement (102) du corps d'obturation (3 ; 84) il forme une surface circulaire.

9. Soupape selon l'une des revendications 1 à 8, **caractérisée en ce que** le siège de soupape (5 ; 86) est une partie constituante intégrale du boîtier de soupape (2 ; 62).

10. Soupape selon l'une des revendications 1 à 9, **caractérisée en ce que** le boîtier de soupape (2 ; 62) est une pièce tubulaire en T (64) avec une pièce tubulaire de passage (68) traversant sensiblement en ligne droite et avec une pièce tubulaire de dérivation (70) s'étendant sensiblement en direction transversale par rapport à cela et **en ce que** la pièce tubulaire de passage (68) comprend sur son côté intérieur une section de surface circulaire, en saillie et sphérique, qui se trouve sur un plan incliné avec un angle de 45° par rapport à l'axe longitudinal (98 ; 100) aussi bien de la pièce tubulaire de passage (68) que de la pièce tubulaire de dérivation (70), et sur laquelle s'appuie la surface d'étanchéité de soupape (50 ; 88), la section de surface sphérique s'étendant le long d'une des deux zones d'angle entre la pièce tubulaire de passage (68) et la pièce tubulaire de dérivation (70).

11. Soupape selon la revendication 10, **caractérisée en ce que** la section de surface sphérique est formée par la déformation locale en forme de moulure de la pièce tubulaire en T (64).

12. Soupape selon l'une des revendications 1 à 11, **caractérisée en ce que** le boîtier de soupape (2 ; 62) est composé de matériau synthétique.

13. Soupape selon l'une des revendications 1 à 12, **caractérisée en ce que** le boîtier de soupape (2 ; 62) est une pièce moulée par injection.

14. Soupape selon l'une des revendications 1 à 13, **caractérisée en ce que** le boîtier de soupape (2 ; 62) est réalisé par une déformation sans enlèvement de copeaux d'une pièce tubulaire.
